# EUROPÄISCHE PATENTSCHRIFT

(11) **EP 1 017 756 B1**
(45) Veröffentlichungstag und Bekanntmachung des Hinweises auf die Patenterteilung: **12.06.2002**
(21) Anmeldenummer: 98941389.3
(22) Anmeldetag: 21.07.1998
(51) Int. Cl.: C09K 19/02, C09K 19/42, G06K 19/077

(54) **CHIPKARTE MIT BISTABILER ANZEIGE**
CHIP CARD WITH A BISTABLE DISPLAY
CARTE A PUCE AVEC AFFICHEUR BISTABLE

(30) Priorität: 25.07.1997 DE 19732160
(43) Veröffentlichungstag der Anmeldung: 12.07.2000
(73) Patentinhaber: Aventis Research & Technologies GmbH & Co KG, 65926 Frankfurt am Main (DE)
(72) Erfinder: JI, Li, Tokyo (JP); WINGEN, Rainer, D-65795 Hattersheim (DE)
(74) Vertreter: Isenbruck, Günter, Dr.
(86) Internationale Anmeldenummer: EP9804545
(87) Internationale Veröffentlichungsnummer: WO9905236

(56) Entgegenhaltungen:
- EP-A- 0 291 259
- EP-A- 0 844 293

## Beschreibung

Unter einer Chipkarte versteht man eine Karte, üblicherweise aus Kunststoff und im Kreditkartenformat, versehen mit einem integrierten Schaltkreis, welcher Informationen elektronisch speichern und/oder verarbeiten kann, und Mitteln zur Informationsübertragung zwischen der Karte und einem elektronischen Leseund/oder Schreibsystem.
Eine Smartcard ist eine Chipkarte, die zusätzlich Mittel zur Überprüfung /Kontrolle des Zugriffs auf die Karte enthält. Beispielsweise kann ein solches Mittel ein integrierter Schaltkreis sein, durch den kontrolliert wird, wer die gespeicherten Informationen zu welchem Zweck verwendet, wodurch die Datensicherheit erhöht werden kann.

Chip- bzw. Smartkarten sind, beispielsweise als Telefon- und Kreditkarten "Medicards", "Cashcards" und als Ausweise zur Zugangskontrolle, bereits in vielfältigem Einsatz.
Für die nahe Zukunft erwartet man ein weiteres Vordringen dieser Technologien in Bereiche, wie die "elektronische Brieftasche", d.h. Ersatz von Bargeld, Fahrkarten und Pay-TV.

Wünschenswert und bereits vorgeschlagen für Chipkarten ist eine permanent sichtbare elektronische Anzeige (Display) auf der Karte, die Informationen, beispielsweise über Füllstand, Restbetrag oder Datumsangaben, liefert.

Eine solche Anzeige sollte auch ohne das Anlegen einer elektrischen Spannung sichtbar sein, da weder die Dicke noch die Herstellkosten einer Karte den Einbau einer Batterie erlauben. Die Anzeige muß also eine optische Speicherfähigkeit besitzen.

Aus Gründen der optischen Bistabilität wurden für solche Anwendungen bisher oberflächenstabilisierte-ferroelektrische-Flüssigkristall-Displays (Surface Stabilized Ferroelectric Liquid Crystal Displays, SSFLCD) und Bistabil-Nematische-Anzeigen (siehe E. Lüder et al. 1997 International Symposium, Seminar & Exhibition, Society of Information Display, Boston, Massachusetts, Artikel 9.4, SID 97 DIGEST, S. 109-112) sowie oberflächen- oder polymerstabilisierte-cholesterische-Texturen (SSCT oder PSCT) vorgeschlagen.

SSFLCD's sind bereits als Computerdisplays im Einsatz. Die Verwendung in Chipkarten erfordert jedoch ein beträchtlich anderes Eigenschaftsprofil, das beispielsweise nach ISO 7816 neben der optischen Speicherfähigkeit Druck- und Stoßfestigkeit, Biegsamkeit, eine niedrige Adressierspannung von vorzugsweise ≤ 5 Volt, Lesbarkeit bei Tageslicht und besonders geringe Dicke und Gewicht umfaßt.

EP-A-0 291 259 betrifft eine ferroelektrische Flüssigkristall-Datenspeicherkarte. In der FLC-Chipkarte wird ein Flüssigkristallmaterial mit starken dielektrischen Eigenschaften eingesetzt. Es werden beispielsweise biphenyl-verwandte chiralsmektische Flüssigkristalle angegeben. Die genaue Zusammensetzung der FLC-Mischung und die Struktur der eingesetzten Verbindungen ist jedoch nicht beschrieben.

Es besteht ein hoher Bedarf an SSFLC-Displays bzw. an ferroelektrischen Flüssigkristallmischungen (FLC) für solche Displays, die speziell den Anforderungen an Chip- oder Smartcards gewachsen sind.

Es wurde nun überraschend gefunden, daß sich ferroelektrische Flüssigkristallmischungen, die niedrige Werte der optischen Anistropie (Δn) aufweisen, in besonderer Weise zum Einsatz in ferroelektrischen Flüssigkristall-(FLC)-Displays für Chipkarten eignen.

Gegenstand der Erfindung ist daher eine Chipkarte, enthaltend ein ferroelektrisches Flüssigkristalldisplay mit einer ferroelektrischen Flüssigkristallschicht, dadurch gekennzeichnet, daß die Flüssigkristallschicht Werte der optischen Anisotropie von ≤ 0,15 im Bereich der Arbeitstemperatur aufweist, wobei die Flüssigkristallschicht eine oder mehrere der nachstehenden verbindungen der Formel (I) enthält.

Die erfindungsgemäße Chipkarte ist in besonderer Weise praxistauglich, da das Display bei Spannungen ≤ 15 V, vorzugsweise ≤ 5 V geschaltet werden kann. Sie ist in einem breiten Temperaturbereich beschreibbar und robust gegenüber alltagsüblichen Belastungen, wie Druck, Biegung oder Deformation durch thermische Belastung.

Das erfindungsgemäß eingesetzte Display weist einen hohen Schaltwinkel, eine niedrige Schaltspannung und eine geringe Temperaturabhängigkeit auf. Defektlinien können unterdrückt werden. Es entstehen keine 'zig-zag' Deformationen, oder wenn, dann von derart geringer Ausprägung, daß sie nicht ins Gewicht fallen.

Vorzugsweise ist die erfindungsgemäße Chipkarte eine Smartcard.

Die optische Anisotropie beträgt vorzugsweise 0,05 bis 0,15, besonders bevorzugt 0,08 bis 0,14, ganz besonders bevorzugt 0,10 bis 0,14, insbesondere 0,11 bis 0,14, im Temperaturbereich der Arbeitstemperatur des Flüssigkristalldisplays. Der Bereich der Arbeitstemperatur ist durch die Arbeitstemperaturen der Schreib-/Lesegeräte definiert und liegt somit im allgemeinen zwischen -10 und 40°C.

Der geneigt smektische, optische aktive (ferroelektrische) Flüssigkristall (FLC) besteht vorzugsweise aus einer Mischung niedermolekularer Verbindungen der unter angegebenen Formel (I) sowie möglicherweise weitere Mischungskomponenten. Arbeitsphase ist eine chiral getiltete Phase, vorzugsweise die S_{c}*-Phase. Vorzugsweise enthalten die Mischungen eine nicht optisch aktive Basismischung, vorzugsweise in einem Anteil von > 50 %, und eine oder mehrere optisch aktive Verbindungen (Dotierstoffe), die selbst flüssigkristallin sein können, aber nicht flüssigkristallin sein müssen.

Die Spontanpolarisation der Mischung liegt im allgemeinen im Bereich von 0,1 bis 100 nCcm⁻², vorzugsweise 3 bis 60 nCcm⁻², besonders bevorzugt von 5 bis 40 nCcm⁻².

Zur Herstellung einer erfindungsgemäßen Chipkarten-Display-Mischung geeignete Verbindungen lassen sich durch die allgemeine Formel (I) beschreiben,

R¹(-A¹-M¹)ₐ(-A²-M²)_{b}-A³-(M⁴-A⁴)_{c}-(M⁵-A⁵)_{d}-R² (I)

in der die Symbole und Indizes folgende Bedeutungen haben:
- R¹: ist
a) Wasserstoff, -F, -Cl, -CF₃, -OCF₃ oder -CN,
b) ein geradkettiger oder verzweigter Alkylrest (mit oder ohne asymmetrisches C-Atom) mit 1 bis 20 C-Atomen, wobei
   b1) eine oder mehrere nicht benachbarte und nicht terminale CH₂-Gruppen durch -O-, -S-, -CO-, -CO-O-, -O-CO-, -O-CO-O- oder -Si(CH₃)₂- ersetzt sein können und/oder
   b2) eine oder mehrere CH₂-Gruppen durch -CH=CH-, -C≡C-, Cyclopropan-1,2-diyl, 1,4-Phenylen, 1,4-Cyclohexylen oder 1,3-Cyclopentylen ersetzt sein können und/oder
   b3) ein oder mehrere H-Atome durch F, CN und/oder Cl ersetzt sein können und/oder
   b4) die terminale CH₃-Gruppe durch eine der folgenden chiralen Gruppen (optisch aktiv oder racemisch) ersetzt sein kann: 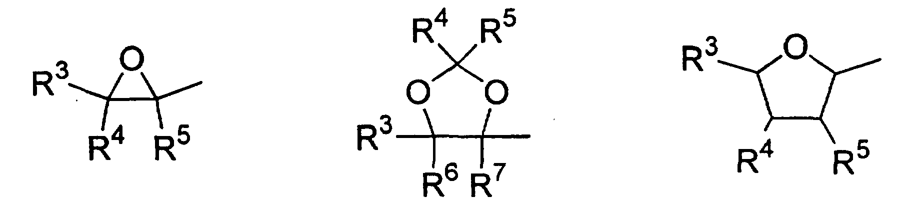 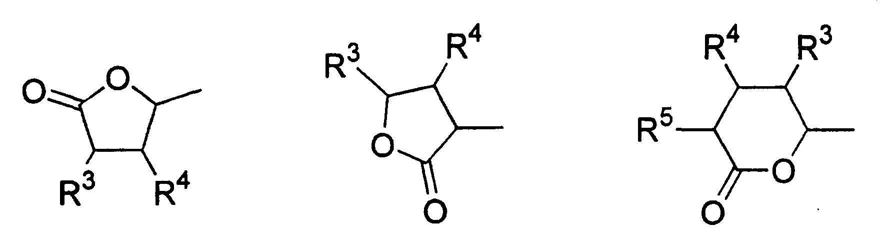 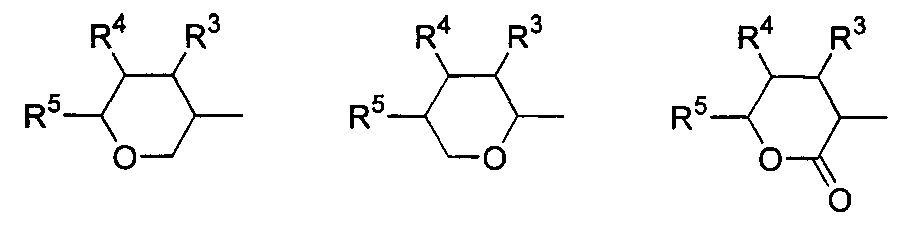 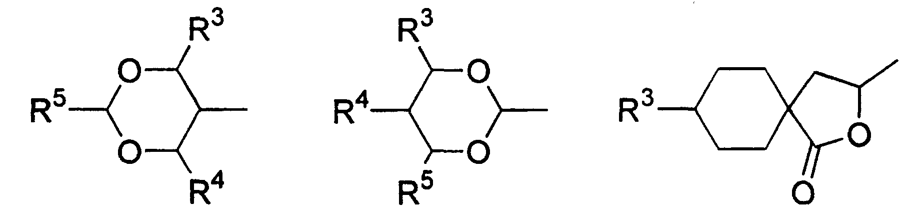 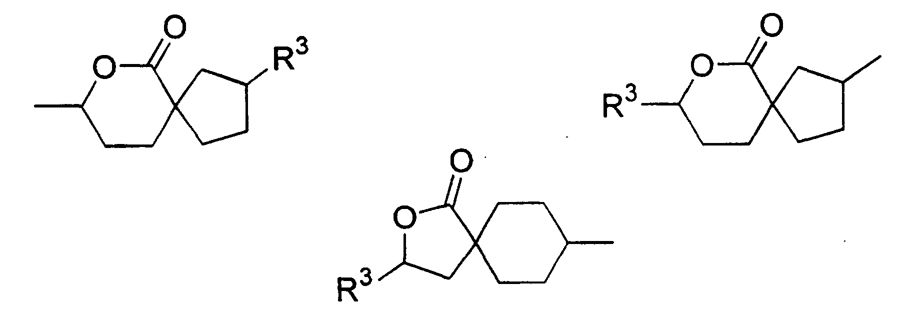 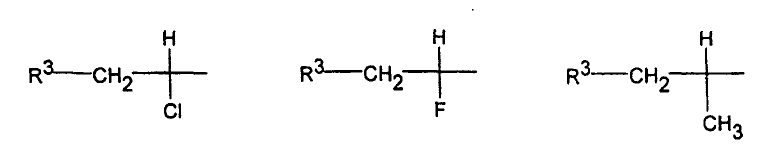 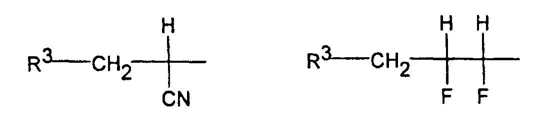
- R³, R⁴, R⁵, R⁶, R⁷: sind gleich oder verschieden
a) Wasserstoff
b) ein geradkettiger oder verzweigter Alkylrest (mit oder ohne asymmetrisches Kohlenstoffatom) mit 1 bis 16 C-Atomen, wobei
   b1) eine oder mehrere nicht benachbarte und nicht terminale CH₂-Gruppen durch -O- ersetzt sein können und/oder
   b2) eine oder zwei CH₂-Gruppen durch -CH=CH- ersetzt sein können,
c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind;
- R²: ist ein geradkettiger oder verzweigter Alkylrest (mit oder ohne asymmetrisches C-Atom) mit 1 bis 20 C-Atomen, wobei
a) eine oder mehrere nicht benachbarte und nicht terminale CH₂- Gruppen durch -O-, -S-, -CO-, -CO-O-, -O-CO-, -O-CO-O- oder -Si(CH₃)₂- ersetzt sein können und/oder
b) eine oder mehrere CH₂- -Gruppen durch -CH=CH-, -C≡C-, Cyclopropan-1,2-diyl, 1,4-Phenylen, 1,4-Cyclohexylen oder 1,3-Cyclopentylen ersetzt sein können;
- M¹, M², M⁴, M⁵: sind gleich oder verschieden eine Einfachbindung oder -CO-O-, -CO-S-,-CS-O-,, -CS-S-, -CH₂-O-, -CH₂-S-, -CH₂-CH₂-, -CH=CH-, -C≡C-, -CH₂-CH₂-CO-O-, -CH₂CH₂CH₂O-, -CH₂CH₂CH₂CH₂-, (E)-CH=CHCH₂O- und deren spiegelbildliche Anordnungen; oder eine Einfachbindung;
- A¹, A⁵: sind gleich oder verschieden Cyclohexan-1,4-diyl, 1-Cyano-cyclohexan-1,4-diyl, 1,3-dioxan-2,5-diyl, 5-cyano-1,3-dioxan-2,5-diyl, 1,3-dioxaborinan-2,5-diyl, 1-Alkyl-1-silacyclohexan-1,4-diyl
- A², A⁴: sind gleich oder verschieden Cyclohexan-1,4-diyl, 1-Cyano-cyclohexan-1,4-diyl, 1,3-dioxan-2,5-diyl, 5-cyano-1,3-dioxan-2,5-diyl, 1,3-dioxaborinan-2,5-diyl, 1-Alkyl-1-silacyclohexan-1,4-diyl, 1,-4-Phenylen, 2-Fluor-1,4-phenylen, 2,3-Difluor-1,4-phenylen, Pyrimidin-2,5-diyl, Pyridin-2,5-diyl, 2-Fluor-pyridin-3,6-diyl,
- A³: 1,4-Phenylen, wobei ein oder mehrere H-Atome durch F, Cl, CH₃, C₂H₅, OCH₃, CF₃, OCF₃ und/oder CN ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, (1,3,4)-Thiadiazol-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, Naphthalin-1,4-diyl oder Naphthalin-1,5-diyl, wobei jeweils ein oder mehrere H-Atome durch F, Cl und/oder CN ersetzt sein können und/oder eine oder zwei CH-Gruppen durch N ersetzt sein können
- a, b, c, d: sind null oder eins und die Summe a+d ist 1 oder 2
mit der Maßgabe, daß die Verbindung der Formel (I) nicht mehr als vier fünf- oder mehrgliedrige Ringsysteme enthalten darf.

Bevorzugt haben die Symbole und Indizes in der Formel (1) folgende Bedeutungen:
- R¹: ist bevorzugt
a) Wasserstoff, -F, -OCF₃, oder -CN,
b) ein geradkettiger oder verzweigter Alkylrest (mit oder ohne asymmetrisches C-Atom) mit 1 bis 18 C-Atomen, wobei
   b1) eine oder mehrere nicht benachbarte und nicht terminale CH₂-Gruppen durch -O-, -CO-O-, -O-CO-, -O-CO-O- oder -Si(CH₃)₂-ersetzt sein können und/oder
   b2) eine CH₂-Gruppe durch Cyclopropan-1,2-diyl, 1,4-Phenylen oder trans-1,4-Cyclohexylen ersetzt sein kann und/oder
   b3) ein oder mehrere H-Atome durch F ersetzt sein können
- R¹: ist besonders bevorzugt
a) Wasserstoff,
b) ein geradkettiger oder verzweigter Alkylrest (mit oder ohne asymmetrisches C-Atom) mit 1 bis 16 C-Atomen, wobei eine oder zwei nicht benachbarte und nicht terminale CH₂-Gruppen durch -O-, -CO-O-, -O-CO-, -O-CO-O- oder -Si(CH₃)₂- ersetzt sein können
- R³, R⁴, R⁵, R⁶, R⁷: sind bevorzugt gleich oder verschieden
a) Wasserstoff,
b) ein geradkettiger oder verzweigter Alkylrest (mit oder ohne asymmetrisches Kohlenstoffatom) mit 1 bis 14 C-Atomen, wobei
   b1) eine oder zwei nicht benachbarte und nicht terminale CH₂-Gruppen durch -O- ersetzt sein können und/oder
   b2) eine CH₂-Gruppe durch -CH=CH- ersetzt sein kann,
c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind.
- R³, R⁴, R⁵, R⁶, R⁷: sind besonders bevorzugt gleich oder verschieden
a) Wasserstoff,
b) ein geradkettiger oder verzweigter Alkylrest (mit oder ohne asymmetrisches Kohlenstoffatom) mit 1 bis 14 C-Atomen, wobei
   b1) eine nicht terminale CH₂-Gruppe durch -O- ersetzt sein kann,
c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind.
- R²: ist bevorzugt
ein geradkettiger oder verzweigter Alkylrest (mit oder ohne asymmetrisches C-Atom) mit 1 bis 18 C-Atomen, wobei
eine oder mehrere nicht benachbarte und nicht terminale CH₂-Gruppen durch -O-, -CO-O-, -O-CO-, -O-CO-O- oder -Si(CH₃)₂- ersetzt sein können und/oder eine CH₂-Gruppe durch Cyclopropan-1,2-diyl, 1,4-Phenylen oder trans-1,4-Cyclohexylen ersetzt sein kann und/oder ein oder mehrere H-Atome durch F ersetzt sein können.
- R²: ist besonders bevorzugt
a) ein geradkettiger Alkylrest mit 4 bis 16 C-Atomen, wobei eine oder zwei nicht benachbarte und nicht terminale CH₂-Gruppen durch -O- und/ oder -Si(CH₃)₂- ersetzt sein können
b) ein verzweigter Alkylrest mit 4 bis 16 C-Atomen, wobei eine oder zwei nicht benachbarte und nicht terminale CH₂-Gruppen durch -O- ersetzt sein können
- M¹, M², M⁴ M⁵: sind bevorzugt gleich oder verschieden -CO-O-, -CH₂-O-, -C≡C-, -CH₂-CH₂-CO-O-, -CH₂CH₂- und deren spiegelbildliche Anordnung oder eine Einfachbindung.
- M¹, M², M⁴, M⁵: sind besonders bevorzugt gleich oder verschieden -CO-O-, -CH₂-O-, und deren spiegelbildliche Anordnung oder eine Einfachbindung.
- A¹, A², A⁴, A⁵: sind bevorzugt gleich oder verschieden Cyclohexan-1,4-diyl, 1,3-dioxan-2,5-diyl, 1,3-dioxaborinan-2,5-diyl, 1-Alkyl-1-sila-cyclohexan-1,4-diyl.
- A¹, A², A⁴, A⁵: sind besonders bevorzugt gleich oder verschieden Cyclohexan-1,4-diyl oder 1,3-dioxan-2,5-diyl.
- A³: ist bevorzugt 1,4-Phenylen, bei dem ein oder 2 H-Atome durch F,Cl, CN oder CH₃ ersetzt sein können, Pyrimidin-2,5-diyl, Pyridin-2,5-diyl, bei dem 1 -Atom durch F ersetzt sein kann, (1,3,4)Thiadiazol-2,5-diyl.
- A³: ist besonders bevorzugt 1,4-Phenylen, 2,3-Difluor-1,4-phenylen, 2-Methyl-1,4-phenylen, 2-Fluor-pyridin-3,6-diyl

Bevorzugte Verbindungen entsprechen den Formeln (I-A1) bis (I-A7)

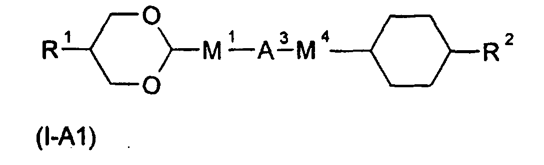

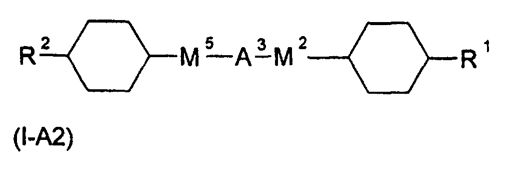

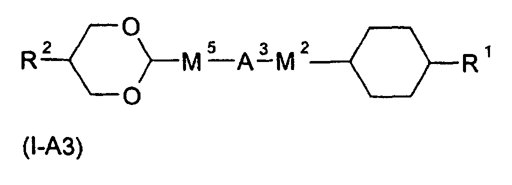

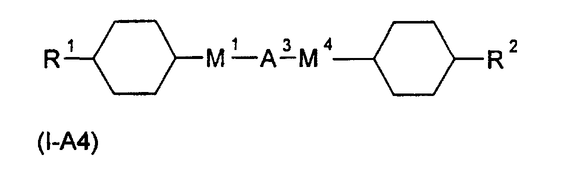

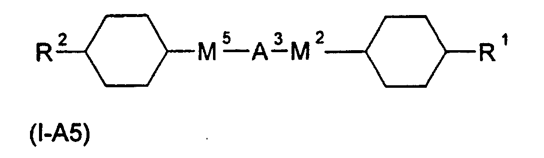

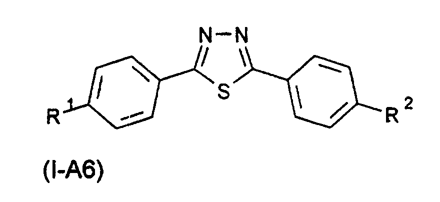

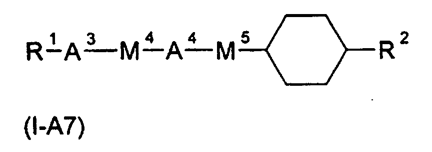

Besonders bevorzugte Verbindungen entsprechenden den Formeln (I-B1 bis (I-B14):

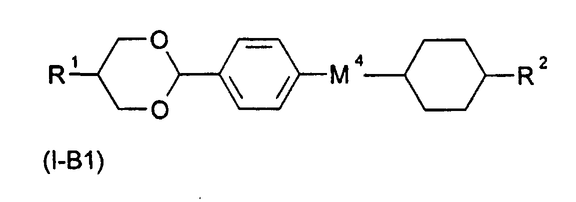

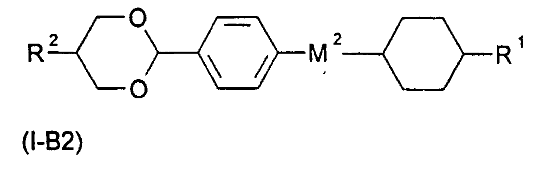

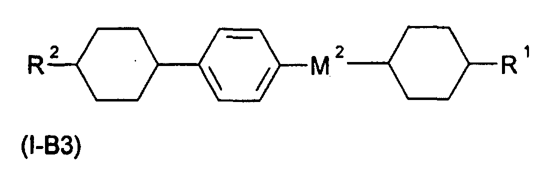

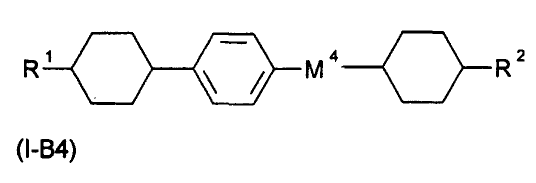

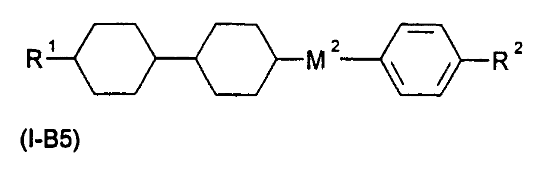

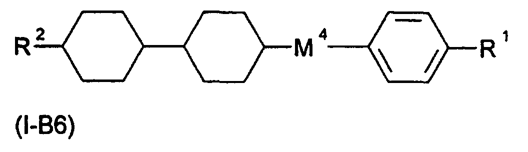

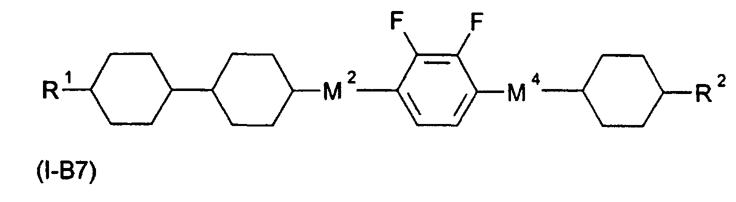

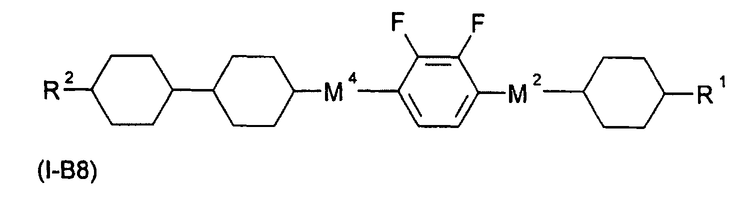

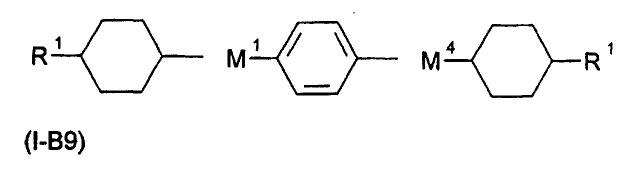

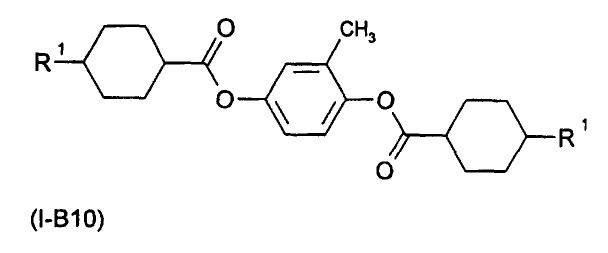

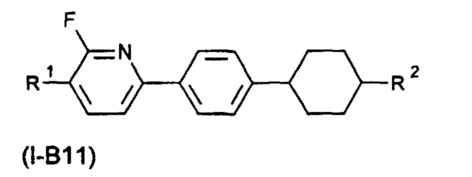

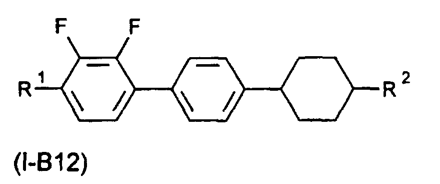

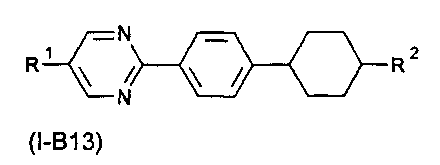

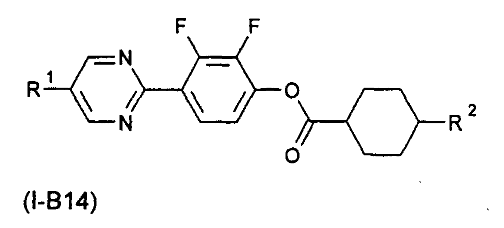

Die erfindungsgemäß verwendeten FLC-Mischungen bestehen aus mindestens 2, vorzugsweise 3 bis 30 besonders bevorzugt 4 bis 20 Komponenten.

Die Mischungen enthalten im allgemeinen 20 bis 85, vorzugsweise 30 bis 85, besonders bevorzugt 40 bis 85 Gew.-% an einer oder mehreren Verbindungen der Formel (I).

Die Komponenten der Flüssigkristallmischung werden vorzugsweise ausgewählt a den oben angeführten Verbindungen der Formel (I). Darüber hinaus können bekannte smektogene und/oder nematogene Verbindungen, vorzugsweise solche mit thermodynamisch stabilen smektischen und/oder nematischen und/oder cholesterischen Phasen, beispielsweise der Formel (II), in der Mischung enthalten sein,

R¹(-A¹-M¹)ₐ(-A²-M²)_{b}(-A³-M³)_{c}-A⁴-R² (II)

in der
- a,b,c: gleich oder verschieden unabhängig voneinander die gleichen Bedeutungen wie in Formel (I) haben
- R¹, R²: gleich oder verschieden unabhängig voneinander die gleichen Bedeutungen wie in Formel (I) haben, mit der Maßgabe, daß höchstens einer der Reste R¹, R² Wasserstoff, -F, -Cl, -CF₃, -OCF₃ oder -CN sein kann und
- M¹, M², M³: gleich oder verschieden unabhängig voneinander die gleichen Bedeutungen wie M¹, M², M⁴, M⁵ in Formel (I) haben.
- A¹, A², A³, A⁴: gleich oder verschieden unabhängig voneinander 1,4-Phenylen, wobei ein oder mehrere H-Atome durch F, Cl, CH₃, C₂H₅, OCH₃, CF₃, OCF₃ und/oder CN ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, (1,3,4)-Thiadiazol-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, Naphthalin-1,4-diyl oder Naphthalin-1,5-diyl, wobei jeweils ein oder mehrere H-Atome durch F, Cl und/oder CN ersetzt sein können und/oder eine oder zwei CH-Gruppen durch N ersetzt sein können.

Dazu gehören z. B.:
- Derivate des Phenylpyrimidins, wie beispielsweise in WO 86/06401, US-4 874 542 beschrieben,
- metasubstituierte Sechsringaromaten, wie beispielsweise in EP-A 0 578 054 beschrieben,
- Siliziumverbindungen, wie beispielsweise in EP-A 0 355 008 beschrieben,
- mesogene Verbindungen mit nur einer Seitenkette, wie beispielsweise in EP-A 0 541 081 beschrieben,
- Hydrochinonderivate, wie beispielsweise in EP-A 0 603 786 beschrieben,
- Phenylbenzoate und Biphenylbenzoate, wie beispielsweise bei P. Keller, Ferroelectrics 1984, 58, 3; Liq. Cryst. 1987, 2, 63; Liq. Cryst. 1989, 5, 153 und J. W. Goodby et al., Liquid Crystals and Ordered Fluids, Bd. 4, New York 1984 beschrieben,
- Thiadiazole, wie beispielsweise in EP-A 0 309 514 beschrieben,
- Biphenyle wie beispielsweise in EP-A 0 207 712 oder Adv. Liq. Cryst, Res. Appl. (Ed. Bata, L.) 3 (1980) beschrieben,
- Phenylpyridine wie beispielsweise in Ferroelectrics 1996, 180, 269 oder Liq. Cryst. 1993, 14, 1169 beschrieben,
- Benzanilide wie beispielsweise in Liq. Cryst. 1987, 2, 757 oder Ferroelectrics 1984, 58, 81 beschrieben,
- Terphenyle wie beispielsweise in Mol. Cryst. Liq. Cryst. 1991, 195, 221; WO-A 89/02425 oder Ferroelectrics 1991, 114, 207 beschrieben,
- 4-Cyanocyclohexyle wie beispielsweise in Freiburger Arbeitstagung Fluessigkristalle 1986, 16, V8 beschrieben,
- 5-Alkylthiophencarbonsäureester wie beispielsweise in Butcher, J.L., Dissertation, Nottingham 1991 beschrieben und
- 1,2-Diphenylethane wie beispielsweise in Liq. Cryst. 1991, 9, 253 beschrieben.

Als chirale, nicht racemische Dotierstoffe kommen beispielsweise in Frage:
- optisch aktive Phenylbenzoate, wie beispielsweise bei P. Keller, Ferroelectrics 1984, 58, 3 und J. W. Goodby et al., Liquid Crystals and Ordered Fluids, Bd. 4, New York 1984 beschrieben,
- optisch aktive Oxiranether, wie beispielsweise in EP-A 0 263 437 und WO-A 93/13093 beschrieben,
- optisch aktive Oxiranester, wie beispielsweise in EP-A 0 292 954 beschrieben,
- optisch aktive Dioxolanether, wie beispielsweise in EP-A 0 351 746 beschrieben,
- optisch aktive Dioxolanester, wie beispielsweise in EP-A 0 361 272 beschrieben,
- optisch aktive Tetrahydrofuran-2-carbonsäureester, wie beispielsweise in EP-A 0 355 561 beschrieben,
- optisch aktive 2-Fluoralkylether, wie beispielsweise in EP-A 0 237 007 und US-5,051,506 beschrieben und
- optisch aktive α-Halogencarbonsäureester, wie beispielsweise in US 4,855,429 beschrieben.

Besonders bevorzugte weitere Mischungskomponenten der Formel (II) sind solche der Gruppen A bis K:
A. Phenylpyrimidinderivate der Formel (III),

   R¹-A¹-A²-R² (III)

   worin
   - R¹ und R²: jeweils Alkyl mit 1-15 C-Atomen, worin auch eine oder zwei nicht benachbarte CH₂-Gruppen durch -O-, -S-, -CO-, -O-CO-, -CO-O-, -O-CO-O-, -CO-S-, S-CO-, -CHHalogen, -CHCN- und/oder -CH=CH-ersetzt sein können und worin ein, mehrere oder alle H-Atome durch F ersetzt sein können,
   - A¹: 1,4-Phenylen oder eine Einfachbindung, und
   - A²: 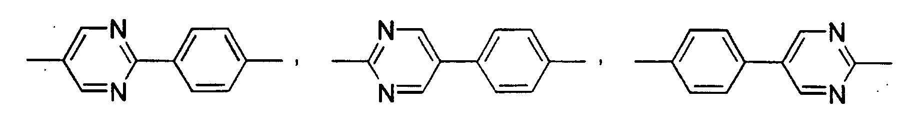 oder 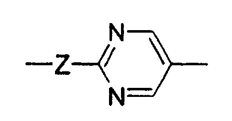 bedeutet, wobei
   - Z: -O-CO-, -CO-O-, -S-CO-, -CO-S-, -CH₂O-, -OCH₂- oder -CH₂CH₂- bedeutet.
B. Verbindungen mit nur einer Seitenkette der Formel (IV),

   R¹(-A¹)ₐ(-M¹)_{b}(-A²)_{c}(-M²)_{d}(-A³)ₑ(-M³)_{f}(-A⁴)-H (IV)

   worin bedeuten:
   - R¹: ein geradkettiger oder verzweigter Alkylrest mit 1 bis 22 bzw. 3 bis 22 C-Atomen, wobei auch eine oder zwei nicht benachbarte und nicht terminale CH₂- Gruppen durch -O-, -CO-, -CO-O-, -O-CO-, -O-CO-Ooder -Si(CH₃)₂- ersetzt sein können,
   - A¹, A², A³, A⁴: gleich oder verschieden
   1,4-Phenylen, wobei ein oder zwei H-Atome durch F oder CN ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl oder Naphthalin-2,6-diyl,
   - M¹, M², M³: gleich oder verschieden
   -CO-O-, -O-CO-, -CH₂-O-, -O-CH₂- oder -CH₂-CH₂-,
   - a, b, c, d, e, f: null oder eins,
   unter der Bedingung, daß die Summe aus a + c + e 0, 1, 2 oder 3 ist.
C. Siliziumverbindungen der Formel (V),

   R¹(-A¹)ᵢ(-M¹)ₖ(-A²)ₗ(-M²)ₘ(-A³)ₙ-R² (V)

   worin bedeuten:
   - R¹: ein geradkettiger oder verzweigter Alkylrest mit 1 bis 22 bzw. 3 bis 22 C- Atomen, wobei auch eine oder zwei nicht benachbarte und nicht terminale CH₂-Gruppen durch -O-, -CO-, -CO-O-, -O-CO- oder -O-CO-O- ersetzt sein können,
   - R²: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können, mit der Maßgabe, daß eine nicht an Sauerstoff gebundene CH₂-Gruppe durch -Si(CH₃)₂- ersetzt ist,
   - A¹, A², A³: gleich oder verschieden
   1,4-Phenyien, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können oder (1,3,4)-Thiadiazol-2,5-diyl,
   - M¹, M²: gleich oder verschieden -CO-O-, -O-CO-, -CH₂-O-, -O-CH₂-,
   - i, k, l, m, n: null oder 1, mit der Maßgabe, daß i + I + n gleich 2 oder 3 ist.
D. Hydrochinonderivate der Formel (VI), 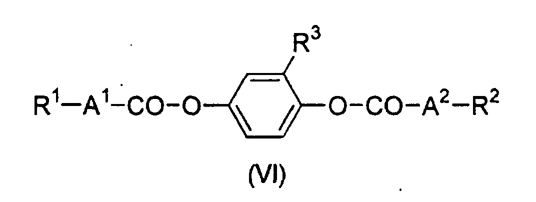 worin bedeuten:
   - R¹, R²: gleich oder verschieden
   ein geradkettiger oder verzweigter Alkylrest mit 1 bzw. 3 bis 16, vorzugsweise 1 bzw. 3 bis 10 C-Atomen, wobei auch eine oder zwei nicht benachbarte und nicht terminale CH₂-Gruppen durch -O-, -CO-, -O-CO-, -CO-O-, -O-CO-O-, vorzugsweise -O-, -O-CO-, -CO-O- ersetzt sein können,
   - R³: -CH₃, -CF₃ oder -C₂H₅, vorzugsweise -CH₃ oder -CF₃,
   - A¹, A²: gleich oder verschieden
   1,4-Phenylen
E. Pyridylpyrimidine der Formel (VII), 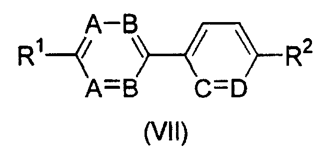 worin bedeuten:
   - A: gleich N und B gleich CH oder A gleich CH und B gleich N, C gleich N und D gleich CH oder C gleich CH und D gleich N, wobei eine oder zwei CH-Gruppen durch CF-Gruppen ersetzt sein können,
   - R¹, R²: gleich oder verschieden,
   ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können.
F. Phenylbenzoate der Formel (VIII),

   R¹(-A)ₐ(-M¹)_{b}(-A)_{c}(-M²)_{d}(-A)ₑ-R² (VIII)

   wobei bedeuten:
   - R¹, R²: gleich oder verschieden
   ein geradkettiger Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können,
   - A: gleich 1,4-Phenylen,
   - M¹, M²: gleich oder verschieden -CO-O-, -O-CO-,
   - a, b, c, d, e: null oder eins, unter der Bedingung, daß a + c + e = 2 oder 3 und b + d = 1 oder 2 ist.
G. Optisch aktive Phenylbenzoate der Formel (IX),

   R¹(-A)ₐ(-M¹)_{b}(-A)_{c}(-M²)_{d}(-A)ₑ-R² (IX)

   wobei bedeuten:
   - R¹, R²: gleich oder verschieden ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO- oder -O-CO-O- ersetzt sein können, und worin wenigstens einer der Reste R¹, R² eine verzweigte, optisch aktive Alkylgruppe ist,
   - A: 1,4-Phenylen, wobei ein oder zwei H-Atome durch F ersetzt sein können,
   - M¹, M²: gleich oder verschieden -CO-O-, -O-CO- oder eine Einfachbindung
   - a, b, c, d, e: null oder eins,
   unter der Bedingung, daß a + c + e = 2 oder 3 und b + d = 1 oder 2 ist.
H. Optisch aktive Oxiranether der Formel (X), 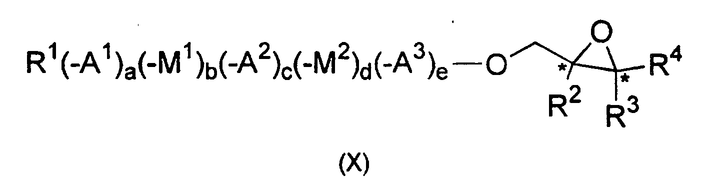 wobei die Symbole und Indizes folgende Bedeutung haben:
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O- oder -Si(CH₃)₂- ersetzt sein können,
   oder die nachfolgende, optisch aktive Gruppe, 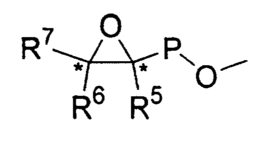
   - R², R³, R⁴, R⁵, R⁶, R⁷: gleich oder verschieden
   Wasserstoff oder ein geradkettiger oder verzweigter Alkylrest mit 1 bis 16 C-Atomen,
   - P: -CH₂- oder -CO-,
   - A¹, A², A³: sind gleich oder verschieden 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, (1,3,4)-Thiadiazol-2,5-diyl,
   - M¹, M²: gleich oder verschieden
   -CO-O-, -O-CO-, -CH₂-O-, -O-CH₂-, -CH₂-CH₂-,
   - a, b, c, d, e: null oder eins.

   Die asymmetrischen C-Atome des Oxiranrings oder der Oxiranringe können gleich oder verschieden R oder S konfiguriert sein.
I. Optisch aktive Oxiranester der Formel (XI), 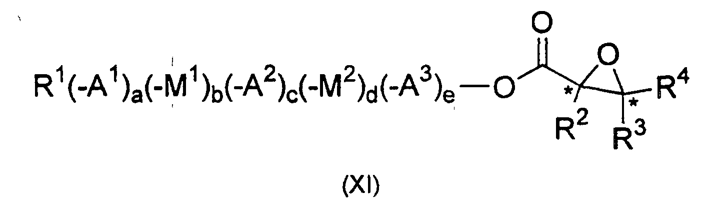 wobei die Symbole und Indizes folgende Bedeutung haben
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O- oder -Si(CH₃)₂- ersetzt sein können,
   - R², R³, R⁴: gleich oder verschieden Wasserstoff oder ein geradkettiger oder verzweigter Alkylrest mit 1 bis 16 C-Atomen,
   - A¹, A², A³: gleich oder verschieden 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, (1,3,4)-Thiadiazol-2,5-diyl,
   - M¹, M²: gleich oder verschieden
   -CO-O-, -O-CO-, -CH₂-O-, -O-CH₂-, -CH₂-CH₂-,
   - a, b, c,: d, e null oder eins.

   Die asymmetrischen C-Atome des Oxiranrings können gleich oder verschieden R oder S konfiguriert sein.
J. Optisch aktive Dioxolanether der Formel (XII), 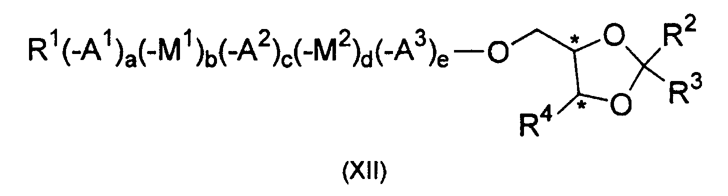 wobei die Symbole und Indizes folgende Bedeutung haben:
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O- oder -Si(CH₃)₂- ersetzt sein können,
   - R², R³, R⁴: gleich oder verschieden
   Wasserstoff, ein geradkettiger oder verzweigter Alkylrest mit 1 bis 16 bzw. 3 bis 10 C-Atomen oder ein Alkenylrest mit 2 bis 16 C-Atomen, wobei R² und R³ zusammen auch -(CH₂)₅- sein können,
   - A¹, A², A³: gleich oder verschieden 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl,
   - M¹, M²: gleich oder verschieden
   -CO-O-, -O-CO-, -CH₂-O-, -O-CH₂-, -CH₂-CH₂-,
   - a, b, c, d, e: null oder eins.

   Asymmetrische C-Atome des Dioxolanrings können, gleich oder verschieden, R oder S konfiguriert sein.
K. Optisch aktive Dioxoianester der Formel (XIII), 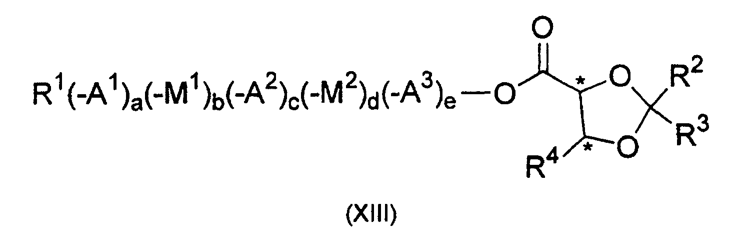 wobei die Symbole und Indizes folgende Bedeutung haben:
   - *: ein chirales Zentrum
   - R¹: ein geradkettiger oder verzweigter Alkyrest mit 1 bis 16 bzw. 3 bis 16 C-Atomen, wobei eine oder mehrere nicht benachbarte und nicht terminale CH₂ Gruppen durch -O-, -CO-, -O-CO- oder -CO-O- ersetzt sein können,
   - R², R³, R⁴: gleich oder verschieden Wasserstoff oder ein Alkyl- oder Alkenylrest mit 1 bis 10 bzw. 2 bis 10 C-Atomen, wobei R² und R³ zusammen auch -(CH₂)₅- sein können,
   - A¹, A², A³: sind gleich oder verschieden 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl,
   - M¹, M²: gleich oder verschieden
   -CO-O-, -O-CO-, -CH₂-O-, -O-CH₂-, -CH₂-CH₂-,
   - a, b, c, d, e: null oder eins.

   Asymmetrische C-Atome des Dioxolanrings können, gleich oder verschieden, R oder S konfiguriert sein.
L. (1,3,4)-Thiadiazole der Formel (XIV), 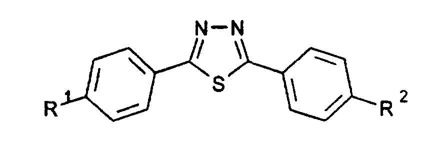 in der R¹ und R² gleich oder verschieden eine geradkettige oder verzweigte Alkylgruppe mit 4 bis 16 C-Atomen bedeuten, worin auch eine nicht terminale -CH₂-Gruppe ersetzt sein kann durch -O-, -C(=O), -C(=O)O- oder -Si(CH₃)₂- und/oder ein oder mehrere H-Atome durch F ersetzt sein können.

Ferner können die FLC-Mischungen neben den Komponenten der Formeln (I) und (II) noch bevorzugt enthalten
metasubstituierte Verbindungen der Formel (XV), 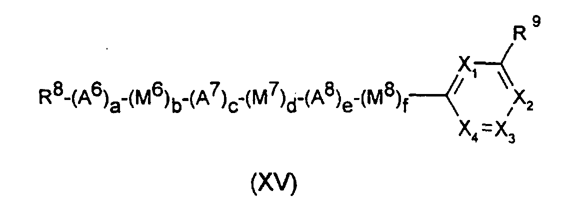 worin bedeuten:
- R⁸, R⁹: gleich oder verschieden
ein geradkettiger oder verzweigter Alkylrest mit 1 bis 22 bzw. 3 bis 22 C-Atomen, wobei auch eine oder zwei nicht benachbarte und nicht terminale CH₂-Gruppen durch -O-, -CO-, -CO-O-, -O-CO-, -O-CO-O- oder -Si(CH₃)₂- ersetzt sein können,
- A⁶, A⁷, A⁸: gleich oder verschieden
1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl, und A⁶ auch 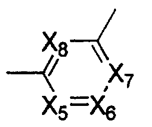
- M⁶, M⁷, M⁸: gleich oder verschieden
-O-, -CO-O-, -O-CO-, -CH₂-O-, -O-CH₂- oder -CH₂-CH₂-;
- X¹, X², X³, X⁴, X⁵, X⁶, X⁷, X⁸: CH oder N, wobei die Zahl der N-Atome in einem Sechsring 0,1 oder 2 beträgt,
- a, b, c, d, e, f: null oder eins,
unter der Bedingung, daß die Summe aus a + c + e 0, 1, 2 oder 3 ist.
und / oder
Makrocyclische Verbindungen der Formel (XVI) 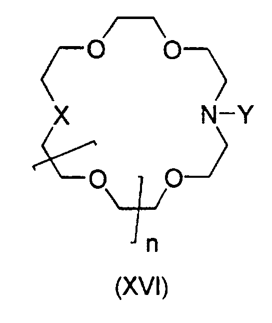 mit
n : 0, 1
Y : -CO-(t-Butyl), -CO-(Adamantyl), -CO-Alkyl
X : -O-, -N(Y)-.

Die Herstellung der Komponenten der Formel (I) bis (XVI) erfolgt nach an sich bekannten, dem Fachmann geläufigen Methoden, wie sie beispielsweise in Houben-Weyl, Methoden der Organischen Chemie, Georg Thieme Verlag, Stuttgart oder auch den zitierten Schriften beschrieben werden.

Die Herstellung der Mischung erfolgt nach bekannten Methoden.

Bevorzugt sind Mischungen, die 20 bis 85, vorzugsweise 40 bis 85 Gew.-% an einer oder mehreren Verbindungen der Formel (I), vorzugsweise der Formeln (IA1) bis (IB14), und 80 bis 15, vorzugsweise 60 bis 15 Gew.-% an einer oder mehreren Verbindungen der Formeln (II), (XIV) und/oder (XV) enthalten.

Ebenso bevorzugt sind Mischungen, die 4 oder mehr Komponenten der Formel (I), besonders bevorzugt 4 oder mehr Komponenten der Formel (I) und 2 oder mehr Komponenten der Formel (II) enthalten.

Weiterhin bevorzugt sind Mischungen, die
- eine oder mehrere Komponenten der Formel (I) enthalten, bei denen A¹, A², A³, A⁴ Cyclohexan-1,4-diyl oder 2,3-Dioxan-2,5-diyl sind,
und/oder
- eine oder mehrere Komponenten der Formel (I) enthalten, bei denen R¹ eine geradkettige Alkylgruppe von 4 bis 16 C-Atomen ist, worin auch eine nicht terminale -CH₂-Gruppe durch -O- ersetzt sein kann und worin eine weitere, nicht benachbarte (nicht terminale) -CH₂-Gruppe durch -Si(CH₃)₂- ersetzt ist,
und/oder
- eine oder mehrere Komponenten der Formel (I) enthalten, bei denen R¹ eine verzweigte Alkylgruppe von 4 bis 16 C-Atomen ist, worin auch eine nicht terminale -CH₂-Gruppe durch -O- ersetzt sein kann,
und/oder
- eine bis fünf Komponenten der Formel (I) enthalten, bei denen R¹ H ist.

Das erfindungsgemäß verwendete ferroelektrische Flüssigkristall (FLC)-Display enthält zwei Trägerplatten. Diese können aus Glas oder, wegen der Biegbarkeit vorzugsweise, Kunststoff bestehen oder auch jeweils eine aus Glas, die andere aus Kunststoff. Als Kunststoffe eignen sich beispielsweise bekannte Kunststoffe wie Polyarylate, Polyethersulfon, Cycloolefin-Copolymere, Polyetherimide, Polycarbonat, Polystyrol, Polyester, Polymethylmetacrylate, sowie deren Copolymere oder Blends. Die Innenseite dieser Trägerplatten sind mit leitfähig transparenten Schichten, sowie Orientierungsschichten und möglicherweise weiterer Hilfsschichten, wie Isolationsschichten, versehen.

Die Orientierungsschicht(en) sind üblicherweise geriebene Filme aus organischen Polymeren oder schräg aufgedampftem Siliziumoxid.

Entscheidend für die elektro-optischen Eigenschaften und Speichereigenschaften des Displays ist die ca. 1-3 µm dicke FLC-Schicht, deren Schichtdicke vorzugsweise durch Abstandshalter festgelegt wird. Diese Abstandshalter können eingemischte Teilchen, wie Kugeln, oder auch strukturierte Säulen im Displayinneren sein.

Die gesamte, üblicherweise mit einem Kleberahmen verschlossene Zelle kann elektrisch, beispielsweise durch Löten, Bonden, Pressen o.ä. kontaktiert werden. Das Display wird mit einer Spannung oder Spannungsimpulsen durch eine geeignete elektronische Schaltung angesteuert. Die Ansteuerung erfolgt im allgemeinen direkt oder als Multiplex-Ansteuerung (siehe z.B. Jean Dijon in Liquid Crystals, Application and Uses (Ed. B. Bahadur) Vol. 1, 1990, Chapter 13, pp. 305-360) oder T. Harada, M. Taguchi, K. lwasa, M. Kai SID 85 Digest, 131 (1985).

Der elektro-optische Effekt, der auf der Doppelbrechung des FLC Materials oder auf der anisotropen Absorption eines eingemischten dichroitischen Farbstoffs beruht, wird zwischen zwei gekreuzten Polarisatoren (Polarisationsfolien) sichtbar. Der Elektrodenabstand beträgt im allgemeinen 1 bis 3 µm, vorzugsweise mindestens 1,5 µm, besonders bevorzugt mindestens 1,8 µm.

Das Display ist für durchfallendes Licht (transmissiv) oder, für reflektiertes Licht (reflexiv) ausgelegt.

Die Herstellung des FLC-Displays für die erfindungsgemäße Chipkarte kann somit allgemein grundsätzlich bekannten Verfahren folgen, wie sie beispielsweise bei E. Lüder et al., 1997 International Symposium, Seminar & Exhibition, Society of Information Display, Boston, Massachusetts, Artikel 9.4, SID 97 DIGEST, S. 109-112.,beschrieben sind.

Zur Herstellung einer Chipkarte wird das FLC-Display in oder auf eine mit einem oder mehreren elektronischen Mikrochips versehenen Kunststoffkarte eingebettet bzw. aufgebracht.

Die Mikrochips enthalten die Programm- und/oder Speicherfunktionen, welche die gewünschte Funktion der Chipkarte gewährleisten. Solche Chips und ihre Herstellung sind dem Fachmann bekannt.

Die Karte besteht im allgemeinen aus Kunststoff, vorzugsweise aus Polyvinylchlorid (PVC), Acryl-butadien-styrol-Copolymeren (ABS) oder Biopol® (ein biologisch abbaubarer Kunststoff, auf Basis nachwasender Rohstoffe, der Firma Monsanto, USA).

Sie enthält zudem Mittel für den elektronischen Datenaustausch mit einem externen Schreib- und/oder Lesesystem, beispielsweise elektrisch leitende Kontakte oder eine "Antenne" in Form von Flachspulen.

Die verwendeten Kunststoffkarten sind bekannt, und größtenteils kommerziell erhältlich (z.B. Gemplus, http://www.gemplus.fr).

Übliche technische Spezifikationen für erfindungsgemäße Chip- oder Smartkarten finden sich beispielsweise in:
ICC-Card Specification for Payment Systems, Fassung 3 (1996), und der darin zitierten Literatur, insbesondere:
   - Europay, MasterCard, and Visa (EMV): June 30, 1996
      Integrated Circuit Card Application Specification for Payment Systems
   - ISO/IEC 7813:1990
      Identification cards - Financial transaction cards
   - ISO 7816:1987
      Identification cards - Integrated circuit(s) cards with contacts
      - Part 1: Physical characteristics
   - ISO 7816-2:1988
      Identification cards - Integrated circuit(s) cards with contacts
      - Part 2: Dimensions and location of contacts
   - ISO/IEC 7816-3:1989
      Identification cards - Integrated circuit(s) cards with contacts
      - Part 3: Electronic signals and transmission protocols
   - ISO/IEC 7816-3:1992
      Identification cards - Integrated circuit(s) cards with contacts
      - Part 3, Amendment 1: Protocol type T=1, asynchronous half duplex block transmission protocol
   - ISO/IEC 7816-3:1994
      Identification cards - Integrated circuit(s) cards with contacts
      - Part 3, Amendment 2: Protocol type selection (Draft International Standard)
   - ISO/IEC 7816-4:1995
      Identification cards - Integrated circuit(s) cards with contacts
      - Part 4, Inter-industry commands for interchange
   - ISO/IEC 7816-5:1994
      Identification cards - Integrated circuit(s) cards with contacts
      - Part 5: Numbering system and registration procedure for application identifiers
   - ISO/IEC 7816-6:1995
      Identification cards - Integrated circuit(s) cards with contacts
      - Part 6: Inter-industry data elements (Draft International Standard).
         Die erfindungsgemäße Chipkarte eignet sich beispielsweise als Scheckkarte, elektronische Fahrkarte, Telefonkarte, Parkhauskarte, "elektronische Brieftasche" oder für Pay-TV.

Auf die in dieser Anmeldung zitierten Literaturstellen wird ausdrücklich Bezug genommen; sie sind durch Zitat Bestandteil der Beschreibung.

Die Erfindung wird durch die nachfolgenden Beispiele weiter erläutert, ohne sie dadurch beschränken zu wollen.

### Beispiel 1: Mischungsbeispiel

Eine FLC-Mischung gemäß nachstehender Zusammensetzung hat die Phasenfolge

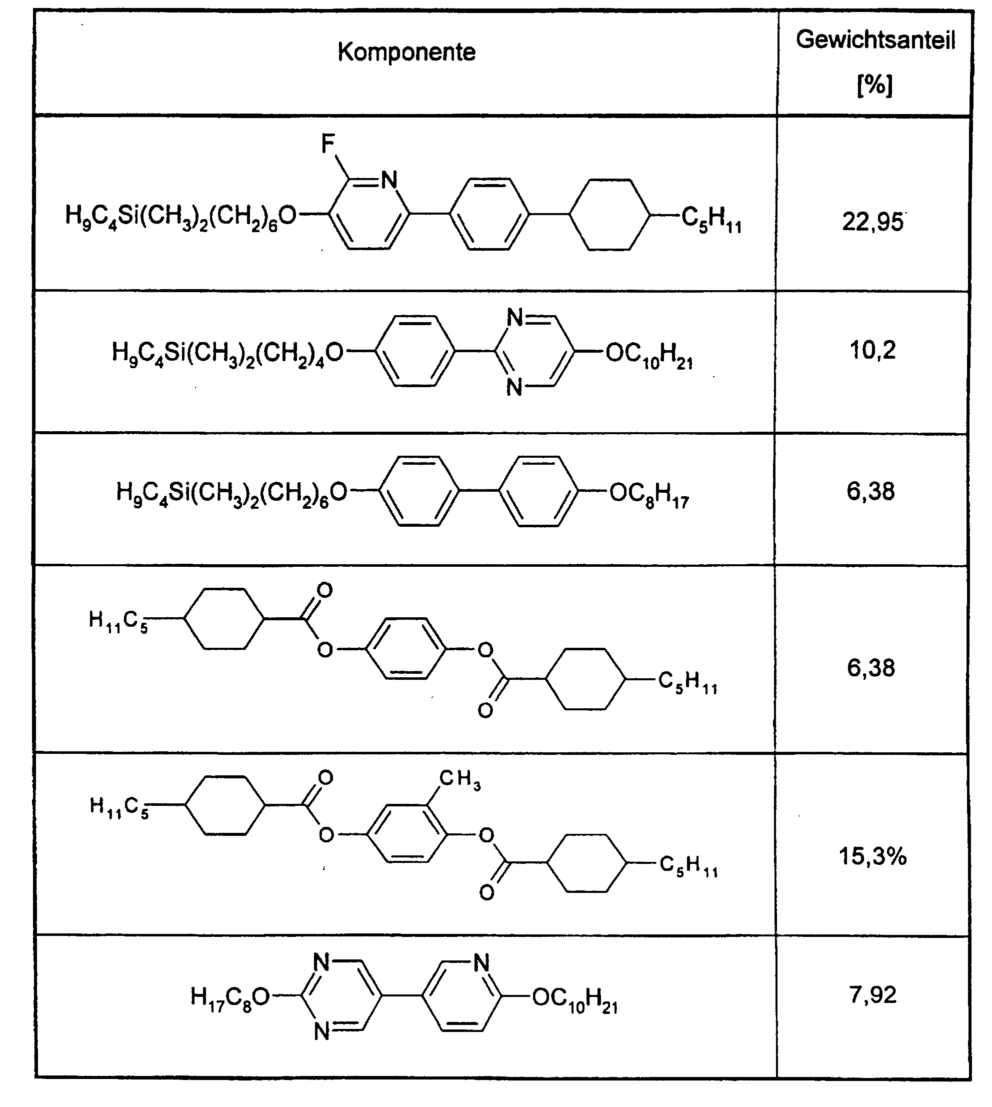

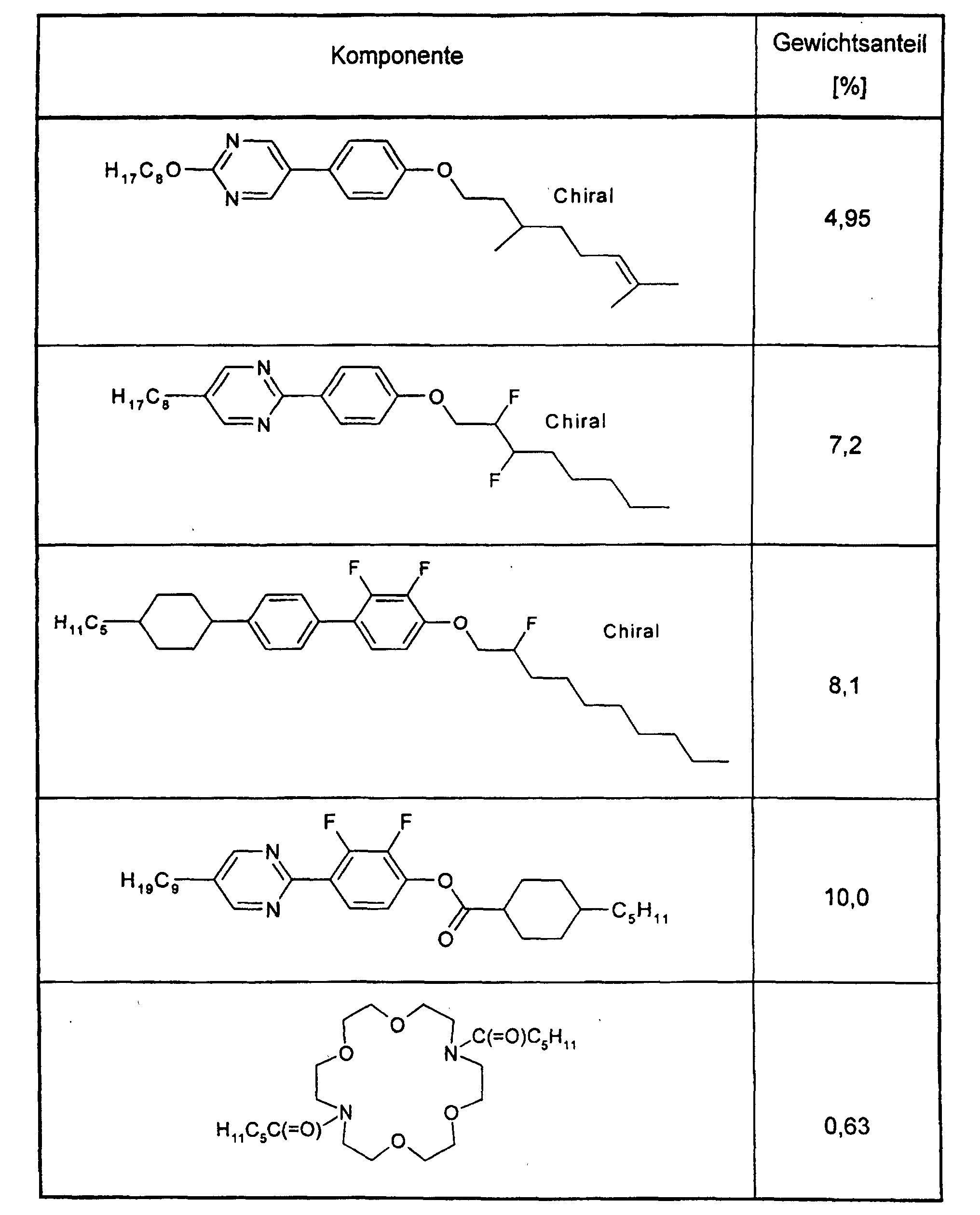

X -5 S_{c} 60 S_{A} 77 N 89 I . Sie weist einen Wert Δn der optischen Anisotropie (abbe-Refraktometer) von 0.121 (bei 30°C) auf. Die Spontanpolarisation beträgt 27nC/cm² bei 25°C.

### Beispiel 2: Display und Karte

Eine flexible Kunststoffolie (erhältlich z.B. von der Firma Sumitomo Bakelite, Produktbezeichnung FST 5352, Dicke 100 µm, 200 Ω / Indium-Zinnoxidbeschichted) wird in einem fotolithographischen Prozeß strukturiert, so daß ein Elektrodenmuster erhalten wird. Die transparenten Leiterbahnen dieser Elektrodenstruktur werden zur elektrischen Ansteuerung des Displays verwendet. Zwei derartig strukturierte Folien, die die Ober- und Unterseite des Displays- also die Trägerplatten - bilden und in einem zusätzlichen Prozeßschritt mit einer Orientierungsschicht versehen wurden, werden mit Hilfe eines Kleberahmens zusammen gefügt und mit der Mischung aus Beispiel 1 unter Zusatz einer Konzentration von 0,5 Gew% Abstandhalter-Kugeln vom Durchmesser 2µm gefüllt. Der Kleber wird durch vorsichtiges Erhitzen gehärtet, die Zelle versiegelt, die Flüssigkristallmischung bei 100 °C befüllt, durch langsames Abkühlen auf Betriebstemperatur orientiert und zwischen einem Paar Polarisationsfolien in eine 'smart cart' eingebaut. Die nach außen geführten Kontakte der Elektroden der Schaltzelle werden mit den entsprechenden Kontakten oder Flachspulen der 'smart card' verbunden. Bei Anlegen einer Spannung von 10 V läßt sich diese Zelle bei 25°C betreiben.

## Patentansprüche

1. Chipkarte, enthaltend ein ferroelektrisches Flüssigkristalldisplay mit einer ferroelektrischen Flüssigkristallschicht, **dadurch gekennzeichnet, daß** die Flüssigkristallschicht Werte der optischen Anisotropie von ≤ 0, 15 im Bereich zwischen -10 und 40°C aufweist, wobei die Flüssigkristallschicht eine oder mehrere Verbindungen der Formel (I) enthält,
R¹(-A¹-M¹)ₐ(-A²-M²)_{b}-A³-(M⁴-A⁴)_{c}-(M⁵-A⁵)_{d}-R² (I)
in der die Symbole und Indizes folgende Bedeutung haben:
R¹ ist
a) Wasserstoff, -F, -Cl, -CF₃, -OCF₃ oder -CN,
b) ein geradkettiger oder verzweigter Alkylrest (mit oder ohne asymmetrisches C-Atom) mit 1 bis 20 C-Atomen, wobei
b1) eine oder mehrere nicht benachbarte und nicht terminale CH₂-Gruppen durch -O-, -S-, -CO-, -CO-O-, -O-CO-, -O-CO-O- oder -Si(CH₃)₂- ersetzt sein können und /oder
b2) eine oder mehrere CH₂-Gruppen durch -CH=CH-, -C〈≡C-, Cyclopropan-1,2-diyl, 1,4-Phenylen, 1,4-Cyclohexylen oder 1,3-Cyclopentylen ersetzt sein können und/oder
b3) ein oder mehrere H-Atome durch F, CN und/oder Cl ersetzt sein können und/oder
b4) die terminale CH₃-Gruppe durch eine der folgenden chiralen Gruppen (optisch aktiv oder racemisch) ersetzt sein kann: 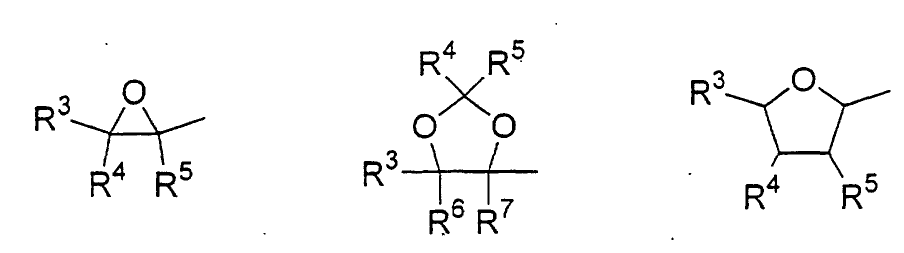 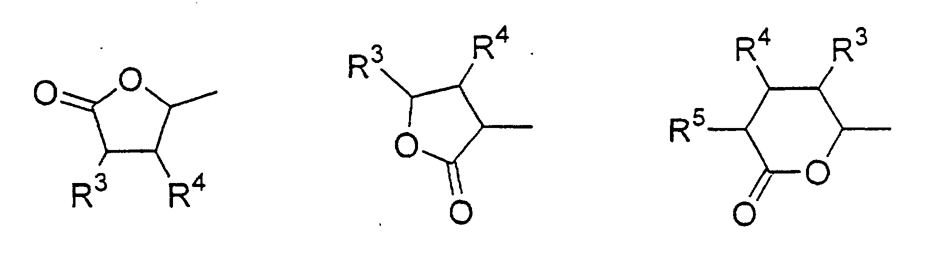 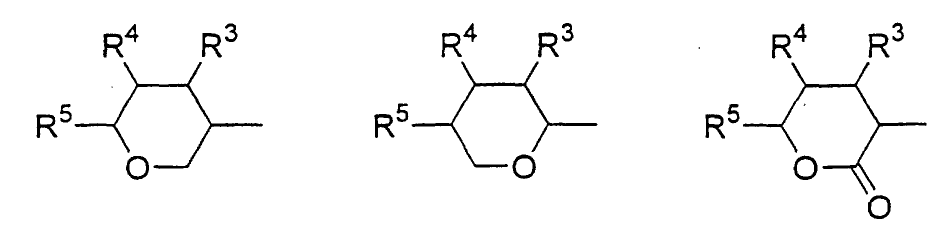 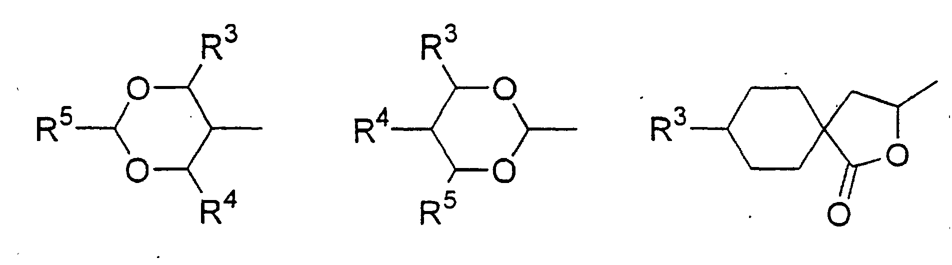 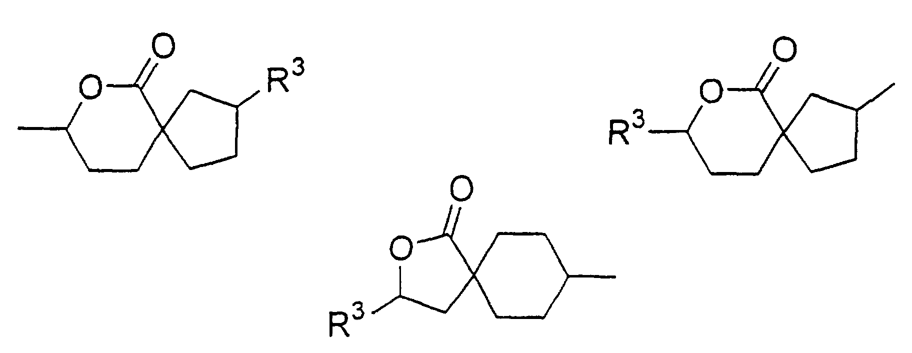 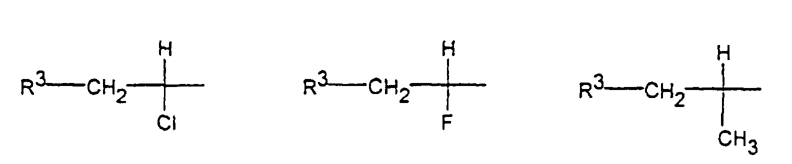 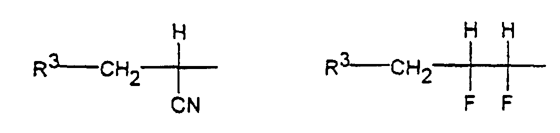
R³, R⁴, R⁵, R⁶, R⁷ sind gleich oder verschieden
a) Wasserstoff
b) ein geradkettiger oder verzweigter Alkylrest (mit oder ohne asymmetrisches Kohlenstoffatom) mit 1 bis 16 C-Atomen, wobei
b1) eine oder mehrere nicht benachbarte und nicht terminale CH₂-Gruppen durch -O- ersetzt sein können und/oder
b2) eine oder zwei CH₂-Gruppen durch -CH=CH- ersetzt sein können,
c) R⁴ und R⁵ zusammen auch -(CH₂)₄- oder -(CH₂)₅-, wenn sie an ein Oxiran-, Dioxolan-, Tetrahydrofuran-, Tetrahydodropyran-, Butyrolacton- oder Valerolacton-System gebunden sind;
R² ist ein geradkettiger oder verzweigter Alkylrest (mit oder ohne asymmetrisches C-Atom) mit 1 bis 20 C-Atomen, wobei
a) eine oder mehrere nicht benachbarte und nicht terminale CH₂-Gruppen durch -O-, -S-, -CO-, -CO-O-, -O-CO-, OCO-O- oder -Si(CH₃)₂- ersetzt sein können und/oder
b) eine oder mehrere CH₂-Gruppen durch -CH=CH-, -C≡C-, Cyclopropan-1,2-diyl, 1,4-Phenylen, 1,4-Cyclohexylen oder 1,3-Cyclopentylen ersetzt sein können;
M¹, M², M⁴, M⁵ sind gleich oder verschieden eine Einfachbindung oder -CO-O-, -CO-S-, -CS-O-, -CS-S-, -CH₂-O-, -CH₂-S-, -CH₂-CH₂-, -CH=CH-, -C≡C-, -CH₂-CH₂-CO-O-, -CH₂-CH₂-CH₂O-, -CH₂CH₂CH₂CH₂-, (E)-CH=CHCH₂O- und deren spiegelbildliche Anordnungen; oder eine Einfachbindung;
A¹, A⁵ sind gleich oder verschieden
Cyclohexan-1,4-diyl, 1-Cyano-cyclohexan-1,4-diyl, 1,3-dioxan-2,5-diyl, 5-cyano-1,3-dioxan-2,5-diyl, 1,3-dioxaborinan-2,5-diyl, 1-Alkyl-1-silacyclohexan-1,4-diyl
A², A⁴ sind gleich oder verschieden
Cycalohexan-1,4-diyl, 1-Cyano-cyclohexan-1,4-diyl, 1,3-dioxan-2,5-diyl, 5-cyano-1,3-dioxan-2,5-diyl, 1,3-dioxaborinan-2,5-diyl, 1-Alkyl-1-silacyclohexan-1,4-diyl, 1,4-Phenylen, 2-Fluor-1,4-phenylen, 2,3-Difluor-1,4-phenylen, Pyrimidin-2,5-diyl, Pyridin-2,5-diyl, 2-Fluor-pyridin-3,6-diyl,
A3 1,4-Phenylen, wobei ein oder mehrere H-Atome durch F, Cl, CH₃, C₂H₅, OCH₃, CF₃, OCF₃ und/oder CN ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können (1,3,4)-Thiadiazol-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F- Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, Naphthalin-1,4-diyl oder Naphthalin-1,5-diyl, wobei jeweils ein oder mehrere H-Atome durch F, Cl und/oder CN ersetzt sein können und/oder eine oder zwei CH-Gruppen durch N ersetzt sein können
a, b, c, d sind null oder eins und die Summe a+d ist 1 oder 2
mit der Maßgabe, daß die Verbindung der Formel (I) nicht mehr als vier fünf- oder mehrgliedrige Ringsysteme enthalten darf.

2. Chipkarte nach Anspruch 1, dadurch gekenmeichnet, daß es sich um eine Smartcard handelt.

3. Chipkarte nach Anspruch 1 oder 2, **dadurch gekennzeichnet, daß** das ferroelektrische Flüssigkristalldisplay für durchfallendes Licht ausgelegt ist.

4. Chipkarte nach Anspruch 1 oder 2, **dadurch gekennzeichnet, daß** das ferroelektrische Flüssigkristalldisplay für reflektiertes Licht ausgelegt ist.

5. Chipkarte nach einem oder mehreren der vorhergehenden Ansprüche, **dadurch gekennzeichnet, daß** optische Anisotropie im Bereich von 0,05 bis 0, 15 liegt.

6. Chipkarte nach Anspruch 1, **dadurch gekennzeichnet, daß** die Flüssigkristallschicht 20 bis 85 Gew.-% an einer oder mehreren Verbindungen der Formel (1) enthält.

7. Verfahren zur Herstellung einer Chipkarte nach einem der Ansprüche 1. bis 6, **dadurch gekennzeichnet, daß** man ein ferroelektrisches Flüssigkristalldisplay mit einer ferroelektrischen Flüssigkristallschicht, die im Bereich der Arbeitstemperatur des Displays eine optische Anisotropie von ≤ 0, 15 aufweist, in oder auf eine Kunststoffkarte einbettet bzw. aufbringt, wobei die Kunststoffkarte mit einem integrierten Schaltkreis, welcher Informationen elektronisch speichem kann, und Mitteln zur Informationsübertragung zwischen der Karte und einem elektronischen Lese- und/oder Schreibsystem versehen ist.

8. Verwendung eines ferroelektrischen Flüssigkristalldisplays wie es in Anspruch 1 definiert ist, zur Herstellung von Chipkarten mit einer permanent ablesbaren Anzeige.

9. Verwendung einer Chipkarte, gemäß einem oder mehreren der Ansprüche 1 bis 6 zur Zugangskontrolle, als Scheckkarte, elektronische Fahrkarte, Telefonkarte, Parkhauskarte, "elektronische Brieftasche" oder für Pay-TV.

## Claims

1. A chip card containing a ferroelectric liquid-crystal display containing a ferroelectric liquid-crystal layer, wherein the liquid-crystal layer has optical anisotropy values of ≤ 0.15 in the region of between -10 and 40°C, wherein the liquid-crystal layer comprises one or more compounds of the formula (I)
R¹(-A¹-M¹)ₐ(-A²-M²)_{b}-A³-(M⁴-A⁴)_{c}-(M⁵-A⁵)_{d}-R² (I)
where the symbols and indices are defined as follows:
R¹ is
a) hydrogen, -F, -Cl, -CF₃, -OCF₃ or -CN,
b) a straight-chain or branched alkyl radical (with or without an asymmetrical carbon atom) having 1 to 20 carbon atoms, where
b1) one or more non-adjacent and non-terminal -CH₂- groups may be replaced by -O-, -S-, -CO-, -CO-O-, -O-CO-, -O-CO-O- or -Si(CH₃)₂-, and/or
b2) one or more -CH₂- groups may be replaced by -CH=CH-, -C≡C-, cyclopropane-1,2-diyl, 1,4-phenylene, 1,4-cyclohexylene or 1,3-cyclopentylene, and/or
b3) one or more H atoms may be replaced by F, CN and/or Cl, and/or
b4) the terminal CH₃ group may be replaced by one of the following chiral groups (optically active or racemic): 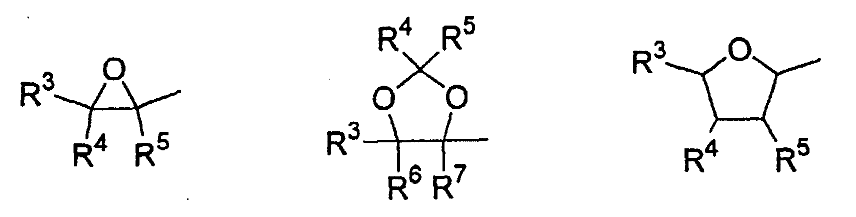 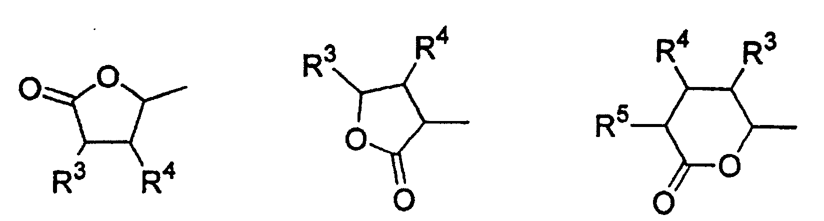 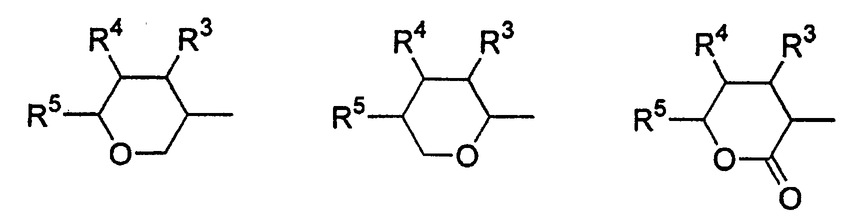 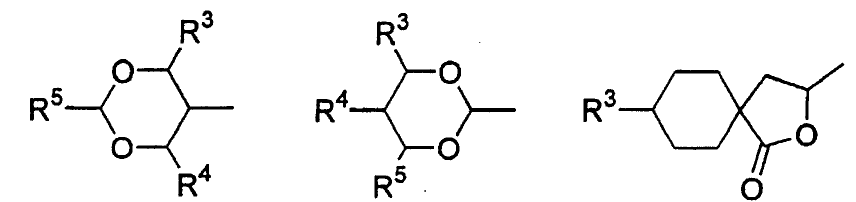 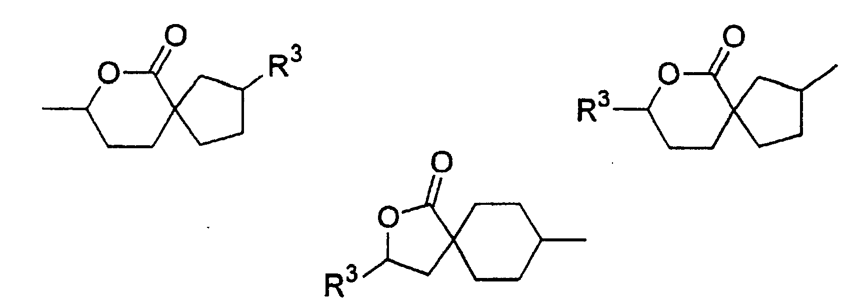 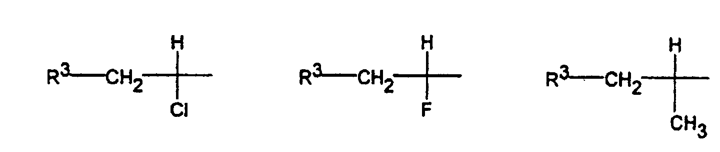 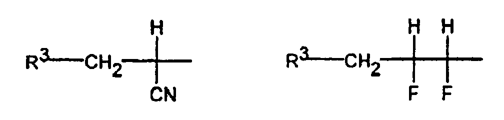
R³, R⁴, R⁵, R⁶ and R⁷ are identical or different and are
a) hydrogen
b) a straight-chain or branched alkyl radical (with or without an asymmetrical carbon atom) having 1 to 16 carbon atoms, where
b1) one or more non-adjacent and non-terminal -CH₂- groups may be replaced by -O-, and/or
b2) one or two -CH₂- groups may be replaced by -CH=CH-,
c) R⁴ and R⁵ together may alternatively be -(CH₂)₄- or -(CH₂)₅- if they are bonded to an oxirane, dioxolane, tetrahydrofuran, tetrahydropyran, butyrolactone or valerolactone system;
R² is a straight-chain or branched alkyl radical (with or without an asymmetrical carbon atom) having 1 to 20 carbon atoms, where
a) one or more non-adjacent and non-terminal -CH₂- groups may be replaced by -O-, -S-, -CO-, -CO-O-, -O-CO-, -O-CO-O- or -Si(CH₃)₂-, and/or
b) one or more -CH₂- groups may be replaced by -CH=CH-, -C≡C-, cyclopropane-1,2-diyl, 1,4-phenylene, 1,4-cyclohexylene or 1,3-cyclopentylene;
M¹, M², M⁴ and M⁵ are identical or different and are a single bond or -CO-O-, -CO-S-, -CS-O-, -CS-S-, -CH₂-O-, -CH₂-S-, -CH₂-CH₂-, -CH=CH-, -C≡C-, -CH₂-CH₂-CO-O-, -CH₂CH₂CH₂O-, -CH₂CH₂CH₂CH₂-, (E)-CH=CHCH₂O-, and their mirror-image arrangements; or a single bond,
A¹ and A⁵ are identical or different and are cyclohexane-1,4-diyl, 1-cyanocyclohexane-1,4-diyl, 1,3-dioxane-2,5-diyl, 5-cyano-1,3-dioxane-2,5-diyl, 1,3-dioxaborinane-2,5-diyl or 1-alkyl-1-silacyclohexane-1,4-diyl;
A² and A⁴ are identical or different and are cyclohexane-1,4-diyl, 1-cyanocyclohexane-1,4-diyl, 1,3-dioxane-2,5-diyl, 5-cyano-1,3-dioxane-2,5-diyl, 1,3-dioxaborinane-2,5-diyl, 1-alkyl-1-silacyclohexane-1,4-diyl, 1,4-phenylene, 2-fluoro-1,4-phenylene, 2,3-difluoro-1,4-phenylene, pyrimidine-2,5-diyl, pyridine-2,5-diyl or 2-fluoropyridine-3,6-diyl;
A³ is 1,4-phenylene, in which one or more H atoms may be replaced by F, Cl, CH₃, C₂H₅, OCH₃, CF₃, OCF₃ and/or CN, pyrazine-2,5-diyl, in which one or two H atoms may be replaced by F, Cl and/or CN, pyridazine-3,6-diyl, in which one or two H atoms may be replaced by F, Cl and/or CN, pyridine-2,5-diyl, in which one or more H atoms may be replaced by F, Cl and/or CN, pyrimidine-2,5-diyl, in which one or two H atoms may be replaced by F, Cl and/or CN, 1,3,4-thiadiazole-2,5-diyl, 1,3-thiazole-2,4-diyl, in which one H atom may be replaced by F, Cl and/or CN, 1,3-thiazole-2,5-diyl, in which one H atom may be replaced by F, Cl and/or CN, thiophene-2,4-diyl, in which one H atom may be replaced by F, Cl and/or CN, thiophene-2,5-diyl, in which one or two H atoms may be replaced by F, Cl and/or CN, naphthalene-2,6-diyl, naphthalene-1,4-diyl or naphthalene-1,5-diyl, in each of which one or more H atoms may be replaced by F, Cl and/or CN and/or one or two CH groups may be replaced by N;
a, b, c and d are zero or one and the sum a + d is 1 or 2,
with the proviso that the compound of the formula (I) cannot contain more than four five- or multimembered ring systems.

2. A chip card as claimed in claim 1, in the form of a smart card.

3. A chip card as claimed in claim 1 or 2, wherein the ferroelectric liquid-crystal display is designed for transmitted light.

4. A chip card as claimed in claim 1 or 2, wherein the ferroelectric liquid-crystal display is designed for reflected light.

5. A chip card as claimed in one or more of the preceding claims wherein the optical anisotropy is in the range from 0.05 to 0.15.

6. A chip card as claimed in claim 1, wherein the liquid-crystal layer comprises from 20 to 85% by weight of one or more compounds of the formula (I).

7. A process for the production of a chip card as claimed in one or more of claims 1 to 6, in which a ferroelectric liquid-crystal display containing a ferroelectric liquid-crystal layer having an optical anisotropy of ≤ 0.15 in the operating temperature range of the display is embedded in or applied to a plastic card, where the plastic card is provided with an integrated circuit which is able to store information electronically, and means for information transmission between the card and an electronic read and/or write system.

8. The use of a ferroelectric liquid-crystal display as defined in claim 1 for the production of chip cards having a permanently legible display.

9. The use of a chip card as claimed in one or more of claims 1 to 6 for access control, as a cheque card, electronic ticket, telephone card, carpark card, electronic wallet or for pay TV.

## Revendications

1. Carte à puce contenant un afficheur à cristaux liquides ferroélectrique présentant une couche de cristaux liquides ferroélectriques, **caractérisée en ce que** la couche de cristaux liquides présente des valeurs d'anisotropie optique ≤ 0,15 dans le domaine compris entre -10 et 40°C, la couche de cristaux liquides contenant un ou plusieurs composés de formule (I)
R¹(-A¹-M¹)ₐ(-A²-M²)_{b}-A³-(M⁴-A⁴)_{c}-(M⁵-A⁵)_{d}-R² (I)
où les symboles et les indices possèdent la signification suivante :
R¹ représente
a) un atome d'hydrogène, des groupes -F, -Cl, -CF₃, -OCF₃ ou -CN,
b) un reste alkyle linéaire ou ramifié (avec ou sans atome de carbone asymétrique) présentant 1 à 20 atomes de carbone,
b1) un ou plusieurs groupes CH₂ non adjacents et non terminaux pouvant être remplacés par des groupes -O-, -S-, -CO-, -CO-O-, -O-CO-, -O-CO-O- ou -Si(CH₃)₂- et/ou
b2) un ou plusieurs groupes CH₂ pouvant être remplacés par -CH=CH-, -C≡C-, cyclopropane-1,2-diyle, 1,4-phénylène, 1,4-cyclohexylène ou 1,3-cyclopentylène et/ou
b3) un ou plusieurs atomes d'hydrogène pouvant être remplacés par des groupes F, CN et/ou Cl et/ou
b4) les groupes CH₃ terminaux pouvant être remplacés par un des groupes chiraux suivants (optiquement actifs ou racémiques) : 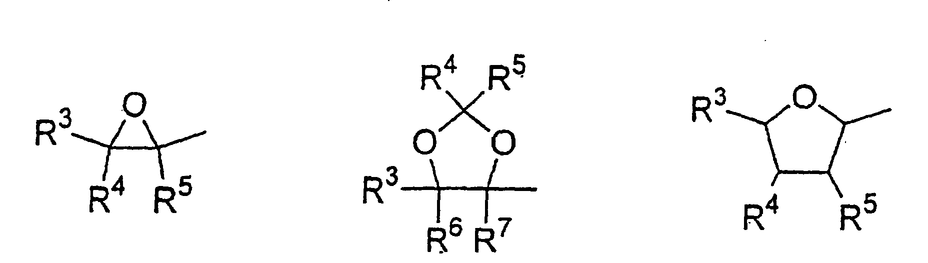 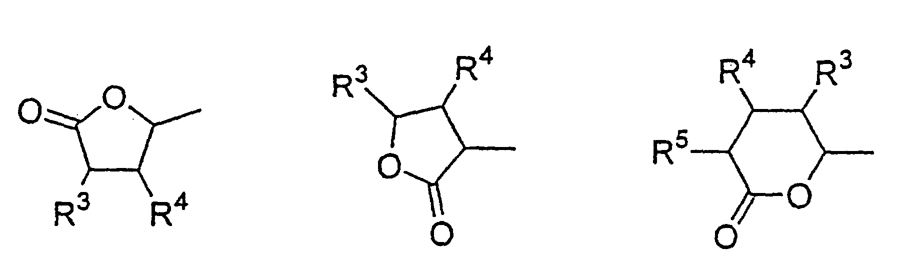 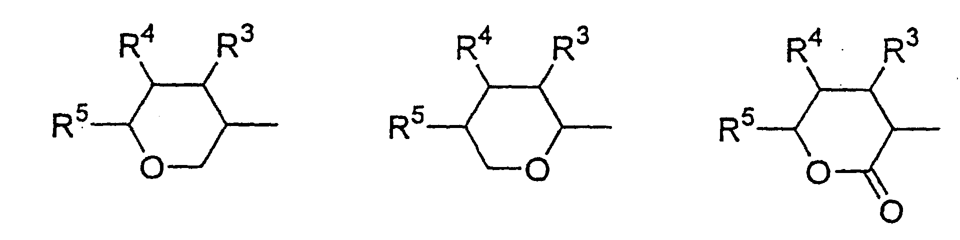 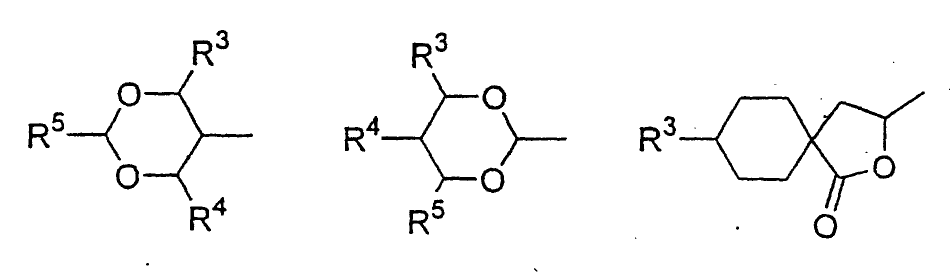 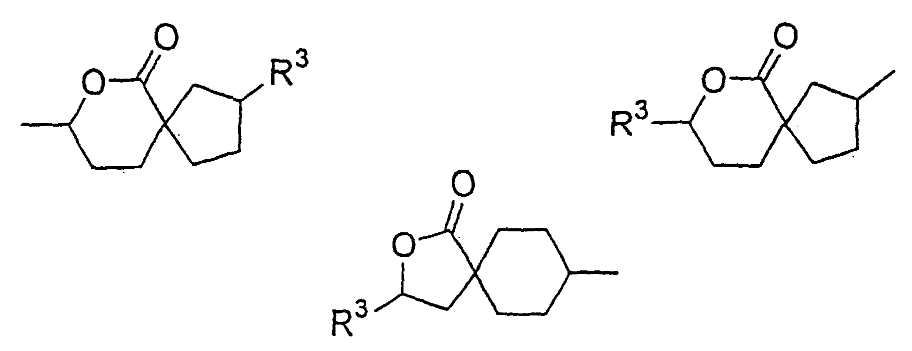 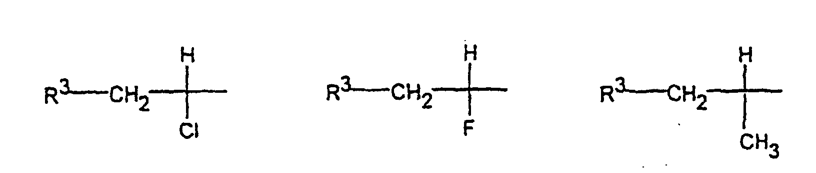 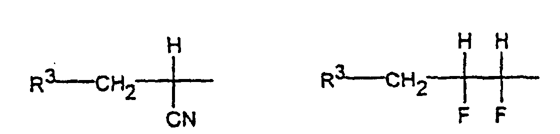
R³, R⁴, R⁵, R⁶, R⁷ sont identiques ou différents et représentent
a) un atome d'hydrogène,
b) un reste alkyle linéaire ou ramifié (avec ou sans atome de carbone asymétrique) présentant 1 à 16 atomes de carbone, où
b1) un ou plusieurs groupes CH₂ non adjacents et non terminaux pouvant être remplacés par des groupes -O- et/ou
b2) un ou deux groupes CH₂ pouvant être remplacés par des groupes -CH=CH-, c)
c) R⁴ et R⁵ conjointement représentent aussi des groupes -(CH₂)₄- ou -(CH₂)₅-, lorsqu'ils sont liés à un système oxiranne, dioxolanne, tétrahydrofuranne, tétrahydropyrane, butyrolactone ou valérolactone ;
R² représente
un reste alkyle linéaire ou ramifié (avec ou sans atome de carbone asymétrique) ayant 1 à 20 atomes de carbone, où
a) un ou plusieurs groupes CH₂ non adjacents et non terminaux pouvant être remplacés par des groupes -O-, -S-, -CO-, -CO-O-, -O-CO-, -O-CO-O- ou -Si(CH₃)₂- et/ou
b) un ou plusieurs groupes CH₂ pouvant être remplacés par des groupes -CH=CH-, -C≡C-, cyclopropane-1,2-diyle, 1,4-phénylène, 1,4-cyclohexylène ou 1,3-cyclopentylène ;
M¹, M², M⁴, M⁵ sont identiques ou différents et représentent une simple liaison ou des groupes -CO-O-, -CO-S-, -CS-O-, -CS-S-, -CH₂-O-, -CH₂-S-, -CH₂-CH₂-, -CH=CH-, -C≡C-, -CH₂-CH₂-CO-O-, -CH₂-CH₂-CH₂O-, -CH₂CH₂CH₂CH₂-, (E)-CH=CHCH₂O- et leurs arrangements spéculaires ; ou une simple liaison ;
A¹, A⁵ sont identiques ou différents
cyclohexane-1,4-diyle, 1-cyano-cyclohexane-1,4-diyle, 1,3-dioxanne-2,5-diyle, 5-cyano-1,3-dioxanne-2,5-diyle, 1,3-dioxaborinane-2,5-diyle, 1-alkyl-1-silacyclohexane-1,4-diyle;
A², A⁴ sont identiques ou différents
cyclohexane-1,4-diyle, 1-cyano-cyclohexane-1,4-diyle, 1,3-dioxanne-2,5-diyle, 5-cyano-1,3-dioxanne-2,5-diyle, 1-alkyl-1-silacyclohexane-1,4-diyle, 1,4-phénylène, 2-fluoro-1,4-phénylène, 2,3-difluoro-1,4-phénylène, pyrimidine-2,5-diyle, pyridine-2,5-diyle, 2-fluoropyridine-3,6-diyle ;
A³ représente
1,4-phénylène, un ou plusieurs atomes de H pouvant être remplacés par des groupes F, Cl, CH₃, C₂H₅, OCH₃, CF₃, OCF₃ et/ou CN, pyrazine-2,5-diyle, un ou deux atomes de H pouvant être remplacés par F, Cl et/ou CN, pyridazine-3,6-diyle, un ou deux atomes de H pouvant être remplacés par F, Cl et/ou CN, pyridine-2,5-diyle, un ou plusieurs atomes de H pouvant être remplacés par F, Cl et/ou CN, pyrimidine-2,5-diyle un ou deux atomes de H pouvant être remplacés par F, Cl et/ou CN, (1,3,4)-thiadiazol-2,5-diyle, 1,3-thiazole-2,4-diyle, un atome de H pouvant être remplacé par F, Cl et/ou CN, 1,3-thiazol-2,5-diyle, un atome de H pouvant être remplacé par F, Cl et/ou CN, thiophène-2,4-diyle, un atome de H pouvant être remplacé par F, Cl et/ou CN, thiophène-2,5-diyle, un ou deux atomes de H pouvant être remplacés par F, Cl et/ou CN, naphtalène-2,6-diyle, naphtalène-1,4-diyle ou naphtalène-1,5-diyle, un ou plusieurs atomes de H pouvant être chaque fois remplacés par F, Cl et/ou CN et/ou un ou deux grupes CH pouvant être remplacés par N,
a, b, c, d valent zéro ou un et la somme a+d est égale à 1 ou 2
à condition que le composé de formule (I) ne puisse pas présenter plus de quatre systèmes penta- ou polycycliques.

2. Carte à puce selon la revendication 1, **caractérisée en ce qu'**il s'agit d'une carte Smartcard.

3. Carte à puce selon la revendication 1 ou 2, **caractérisée en ce que** l'afficheur à cristaux liquides ferroélectriques est conçu pour la lumière transmise.

4. Carte à puce selon la revendication 1 ou 2, **caractérisée en ce que** l'afficheur à cristaux liquides ferroélectriques est conçu pour la lumière réfléchie.

5. Carte à puce selon une ou plusieurs des revendications précédentes, **caractérisée en ce que** l'anisotropie optique se trouve dans le domaine de 0,05 à 0,15.

6. Carte à puce selon la revendication 1, **caractérisée en ce que** la couche de cristal liquide présente une teneur de 20 à 85 % en poids en un ou plusieurs composés de formule (I).

7. Procédé. pour la préparation d'une carte à puce selon l'une des revendications 1 à 6, **caractérisé en ce qu'**un afficheur à cristaux liquides ferroélectrique muni d'une couche de cristaux liquides ferroélectrique, qui présente dans le domaine de la température de travail de l'afficheur une anisotropie optique ≤ 0,15, est noyé dans ou appliqué sur la carte plastique, ladite carte plastique étant pourvue d'un circuit intégré, qui peut stocker et transmettre des informations électroniques pour le transfert d'informations entre la carte et un système de lecture et/ou d'écriture électronique.

8. Utilisation d'un afficheur à cristaux liquides ferroélectrique défini à la revendication 1, pour la préparation de cartes à puce avec une information à lecture permanente.

9. Utilisation d'une carte à puce selon une ou plusieurs des revendications 1 à 6 pour le contrôle d'accès, comme carte-chèque, carte de voyage électronique, carte téléphonique, carte de parking, portefeuille électronique ou "Pay-TV".
